# EUROPEAN PATENT APPLICATION

(11) **EP 1 760 989 A1**
(43) Date of publication of application: **07.03.2007**
(21) Application number: 05291802.6
(22) Date of filing: 30.08.2005
(51) Int. Cl.: H04L 29/08

(54) **Web Services in a peer to peer network**

(71) Applicant: ALCATEL, 75008 Paris (FR)
(72) Inventor: Sienel, Jürgen, 71229 Leonberg (DE); Schwan, Nico, 75328 Schömberg (DE); Drewniok, Marc, 70376 Stuttgart (DE)
(74) Representative: Rausch, Gabriele

(57) **Abstract**

The present invention relates to a method of self-organizing distributing services of a telecommunication network comprising the steps of invoking a service from a client through the telecommunication network by discovering a server providing the service and serving received requests by the server, the method further comprising the steps of deploying the server inside one or more peers of a distributed peer to peer platform, and discovering and performing a service invocation by means of the peer-to-peer platform.

The invention also relates to an apparatus, i.e. service system, and a computer software product therefor.

## Description

The present invention relates to a method of self-organizing distributing services of a telecommunication network. The invention also relates to an apparatus, i.e. service system, and a computer software product therefor.

The current revolution in telecommunications lies in the so-called Next Generation Networks (NGN). But ask them to define an NGN and you will get a whole host of answers. In truth, there is no all-embracing NGN architecture that will solve the problems of all established and emerging operators and service providers, nor provide users with everything their hearts desire. Rather, NGN at present is defined by a set of principles. It is an umbrella concept that brings together a collection of changes that are already taking place in the way networks are structured. It is a direction for the industry to take, with the speed of deployment depending very much on the business needs of different organizations.

The overarching principle of the NGN is flexibility. The flexibility that is needed by established operators to adapt their businesses and their networks to the changing marketplace ... today. This flexibility is provided by a so-called service oriented architecture based on Web services.

A Web service is a software system designed to support interoperable machine-to-machine interaction over a network. It has an interface described in a machine-processable format, specifically web service description language (WSDL). Other systems interact with the Web service in a manner prescribed by its description using SOAP messages, typically conveyed using hyper text transfer protocol (http) with an extensible mark-up language (XML) serialization in conjunction with other Web-related standards. Software applications written in various programming languages and running on various platforms can use web services to exchange data over computer networks like the Internet in a manner similar to inter-process communication on a single computer. This interoperability (e.g., between Java^{™} and Python, or applications running under Microsoft Windows of Microsoft Inc. or Linux) is due to the use of open standards. The Organization for the Advancement of Structured Information Standards (OASIS) and the World Wide Web Consortium (W3C) are the steering committees responsible for the architecture and standardization of web services.

Web services rely on a Web Services Protocol Stack, which subsumes the standards and protocols used to implement a web service, considered as a protocol stack. All data to be exchanged is formatted with XML tags. The encoded message is transmitted through a transport protocol such as simple object access protocol (SOAP), Java^{™} application programmer interface for XML-Based - remote procedure call (JAX-RPC), or XML-RPC. Data can be transported between applications using common protocols such as http, file transfer protocol (ftp), send mail transfer protocol (smtp) or extensible messaging and presence protocol (XMPP). The public interface to the web service is described in WSDL. This is an XML-based service description on how to communicate using the web service. The web service information is published using universal description, discovery and integration (UDDI). It should enable applications to look up web services information in order to determine whether to use them.

Advantages of web services are that Web services provide interoperability between various software applications running on disparate platforms. Web services use open standards and protocols. Protocols and data formats are text-based where possible, making it easy for developers to comprehend. By utilizing http, web services can work through many common firewall security measures without requiring changes to the firewall filtering rules. Web services easily allow software and services from different companies and locations to be combined easily to provide an integrated service. And Web services allow the reuse of services and components within an infrastructure.

The main reason web services are used seems to be that they rely on http over transmission control protocol (TCP) port 80. They can provide a very loose coupling between an application that uses the web service and the web service itself. This should allow either piece to change without negatively affecting the other. This flexibility may become increasingly important as software is built by assembling individual components into a complete application.

Web services can be deployed by application server software. A sample of application servers are Axis and the Jakarta Tomcat server (both at the Apache project), Java Web Services Development Pack (JWSDP) from Sun Microsystems (based on Jakarta Tomcat), JOnAS (part of the ObjectWeb Open Source initiative), or Microsoft .NET servers from Microsoft.

A peer-to-peer (P2P) computer network is a network that relies on the resources like computing power of the participants in the network rather than concentrating it in relatively few servers. P2P networks are typically used for connecting nodes via largely ad hoc connections. Such networks are useful for many purposes. Sharing content files containing audio, video, data or anything in digital format is very common, and real-time data, such as Telephony traffic, is also passed using P2P technology.

A pure peer-to-peer file transfer network does not have the notion of clients or servers, but only equal peer nodes that simultaneously function as both "clients" and "servers" to the other nodes on the network. This model of network arrangement differs from the client-server model where communication is usually to and from a central server. A typical example for a non peer-to-peer file transfer is an FTP server. One user uploads a file to the FTP server, then many others download it, with no need for the up-loader and downloader to be connected at the same time. Some networks and channels use a client-server structure for some tasks, e.g. searching and a peer-to-peer structure for others. Networks such as Gnutella or Freenet use a peer-to-peer structure for all purposes, and are sometimes referred to as true peer-to-peer networks, although Gnutella is greatly facilitated by directory servers that inform peers of the network addresses of other peers. Peer-to-peer architecture embodies one of the key technical concepts of the Internet; described in the first Internet Request for Comments, "RFC 1, Host Software" [1] dated 7 April 1969. More recently, the concept has achieved wide prominence among the general public in the context of the absence of central indexing servers in architectures used for exchanging multimedia files.

An important goal in peer-to-peer networks is that all clients provide resources, including bandwidth, storage space, and computing power. Thus, as nodes arrive and demand on the system increases, the total capacity of the system also increases. This is not true of a client-server architecture with a fixed set of servers, in which adding more clients could mean slower data transfer for all users. The distributed nature of peer-to-peer networks also increases robustness in case of failures by replicating data over multiple peers, and -- in pure P2P systems -- by enabling peers to find the data without relying on a centralized index server. In the latter case, there is no single point of failure in the system.

Web-services (UDDI, WSDL and SOAP) currently offer a component-based model. The component detection is provided by a central UDDI, which provides descriptions for each available service. Mobile Agents offer a dedicated mechanism to move agents between different platforms. Nevertheless this concept is not feasible for real-time services. Usually discovery mechanisms are organized in a similarly centralized fashion.

This invention concerns the problem of de-centralizing the client/server relationship in a Web-service environment. This enables a de-centralized controlling instance of a telecommunication service execution environment.

This problem is solved by a method of self-organizing distributing services of a telecommunication network, comprising the steps of invoking a service from a client through the telecommunication network by discovering a server providing the service and serving received requests by the server, and the steps of deploying the server inside one or more peers of a distributed peer to peer platform, and discovering and performing a service invocation by means of the peer-to-peer platform.

The problem is solved inter alia by a service-system of self-organized distributing services in a telecommunication network, for invoking a service from a client through the telecommunication network by discovering a server providing the service and serving received requests by the server. the service system comprising one or more peers of a distributed peer-to-peer platform, the peers being adapted to deploy a server for the service and the peer being a adapted to discover and perform a service invocation.

And a corresponding computer software product providing a framework for the above method solves the problem.

A server is regarded as a computer software application that carries out some task, i.e. provides a service on behalf of yet another piece of software called a client. In the case of the Web: An example of a server is the Apache Web Server, and an example of a client is the Mozilla web browser. Other server (and client) software exists for other services such as e-mail, printing, remote login, and even displaying graphical output. This is usually divided into file serving, allowing users to store and access files on a common computer; and application serving, where the software runs a computer program to carry out some task for the users.

In other words the invention concerns a peer-to-peer based concept used for distributed service execution in a decentralized environment to provide services on several peers that can be used by other peers through a peer network. These services are not controlled by a central registry and can be accessed dynamically. A service, exemplarily illustrated by a web service, is regarded as a software system to support interoperable machine-to-machine interaction.

An exemplary application of such services might be, e.g. converting a text into its phonetic representation, converting a text in to a wav-file, or streaming a text to audio client. Various other kinds of telecommunication services could be explored using UDDI.

A first service could be re-located, while the others need a specific resource at a node (host) itself. After connecting to the P2P network the node will announce the availability of all three services to its neighbourhood peers. The first service is described as re-locatable; the node is requested to provide the service, which is stored in the shadow of the neighbour peers.

A second node wants to provide a service for reading of e-mails and requires service two of node A. A third node wants to have phonetic representations of a phone book for name dialling, requiring the first service of node A. Node B sends a search request to the network and will receive the binding information of node A as a result. The service on node B could now send a SOAP request to node A to execute the command. Similar node C could access the service 1 on node A. Since the service on node A is re-locatable, either the node A or one of his neighbors could answer.

This has as an advantage over the distribution of service components through a heterogeneous network environment, hidden by a peer to peer platform. The service requester, i.e. the client, and the service provider, i.e. the server, might be different. Service deployment is simplified since no knowledge is required about where the service is located. And the service could be automatic without changing any semantics relocated.

The invention and preferred modes are carried out in the following using
Fig. 1 showing an overall view about the exemplary network architecture used to illustrate the service system according to the invention.
Fig. 2 showing an exemplary design of a peer including its logical modules to illustrate an exemplary implementation of a computer software product according to the invention.
Fig. 3 showing a service request or invocation by client application according to the method according to the invention
Fig. 4 illustrating the donator acceptor scenario within the method according to the invention.
Fig. 5 illustrating a client server scenario within the method according to the invention

The abandonment of a central controlling unit that manages the network or that serves as a registry for Web Service Description files is one of the main advantages. An alternative lookup of the binding point of Web Services is introduced. In Peer-to-peer networks peers may leave or join the network randomly, which is unacceptable for web services. To avoid that a service disappears, the network has to be able to relocate its services.

The exemplary architecture of the service P2P network has to fulfil several requirements. The main task of the network is to provide Web Services to Web Service clients, i.e. where the client can find Web Services and what operations and functionality they provide as usual in a Service Oriented Architecture but without relying on a central UDDI. The client does not have to know where the Web Service will be located during the runtime. Therefore the network has to offer a possibility for the client to find the endpoint of the Web Service dynamically.

Further the network should be able to work completely without a central controlling instance. For this reason a peer-to-peer network structure similar to the KaZAa network fits the demand at its best. In addition every peer of the network should be able to deploy and to run Web Services on the one hand and to be a client of the offered Web Services on the other hand.

In case a peer leaves the network unexpectedly, e.g. due to the reason of connection problems or a sudden shutdown or going down, there has to be the opportunity of transferring concerned services to remote peers in order to avoid that these services disappear. To meet this demand every peer owns a shadow where it stores the services that he received from other peers.

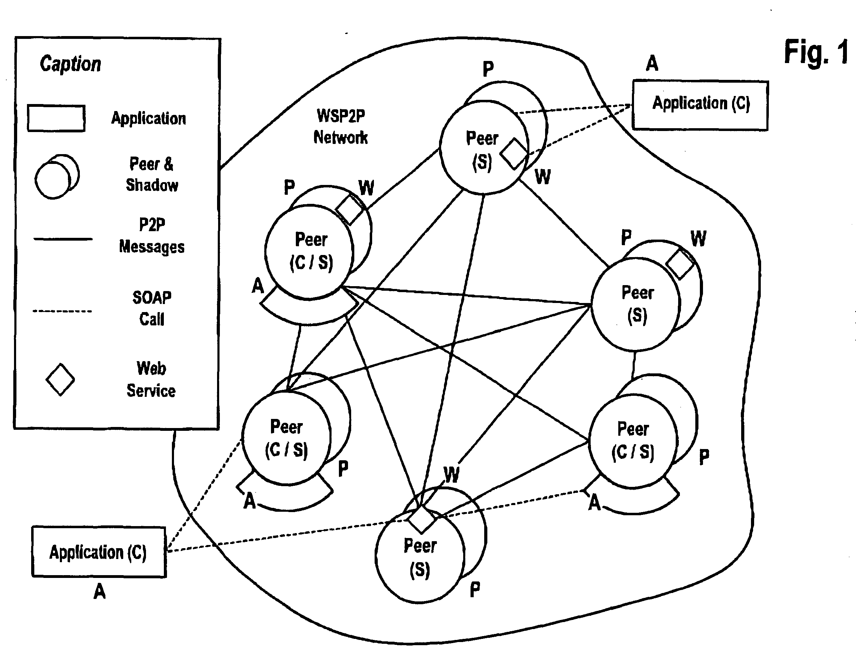

Fig. 1 shows an overall view of the network architecture. The network comprises a set of peers P each comprising a shadow, which is depicted by the two circles. The peers can interchange messages via virtual connections, shown by the lines connecting the peers P. Web services W are located at several peers P, shown by diamonds. Furthermore applications A are shown that can invoke web services S via a SOAP call, shown by the dashed lines.

The Web Service Peer-to-Peer Network consists of peers with their shadows that communicate via peer-to-peer messages for discovering and lookup operations. There are different possibilities of actors. The first type of an actor is the simple peer that may provide a Web Service. Therefore its role can be described as the one of a server (S). The second type is similar to the server (S) type but it also calls Web Services of the network via SOAP. On this account its role is a hybrid client/server role (C/S). The third type of actor is not located inside the actual network. It is not capable of participating in the peer-to-peer communication but it can access the provided Web Services as well, hence it could be regarded as a client (C) like an application A.

To provide this User Network Interface, the peers inside the network offer a SOAP interface for the Web Service lookup operation. So its role can be named as the one of a client.

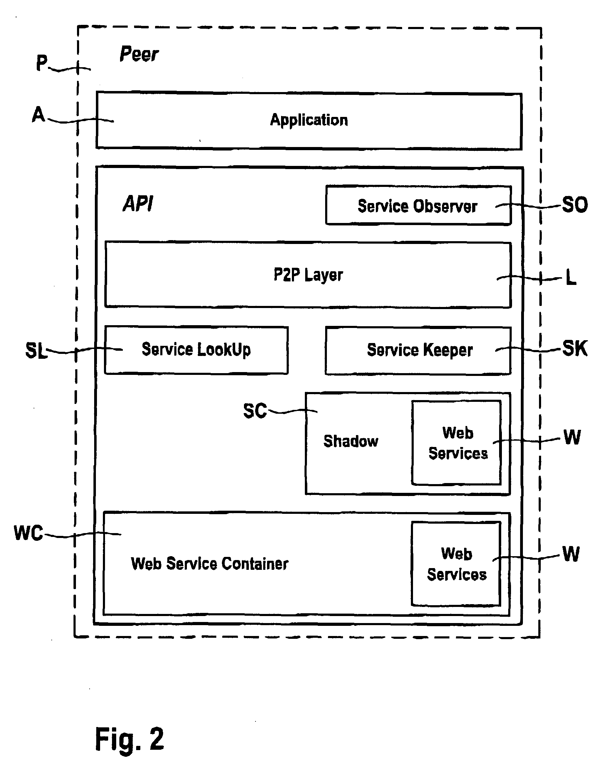

Fig. 2 shows the design of a peer including its logical modules. The logical module decomposition comprises a Service Observer SO that controls the Web Service W information for the client applications A, a Service Keeper SK controls the Web Services W stored in the shadow SC, and a Service LookUp SL controls the Web Services running in the web service runtime environment (WSRE). It further comprises a P2P Layer L that is responsible for the peer-to-peer services or protocols as discovery or messaging. The Shadow SC holds web services in order to save or cache them. The Web Service Container (SC) stores the Web Services, and an Application object A can invoke or use the Web Services W of the network.

The Service Observer SO, the Service LookUp SL, and the Service Keeper SK modules are essentially the logic of the system. They control tasks of the peer and they manage the Web Services W, while the Shadow SC, the Web Service Container WC and P2P Layer L provide services and protocols to the logical modules allowing interaction.

The P2P layer L offers the P2P mechanisms to the peer. It has to provide the discovery of the P2P network, the possibility to send broadcast messages as well as one-to-one messages and finally the transfer or exchange of files.

The exemplary implementation uses as the P2P layer the JXTA^{™} provided by Sun Microsystems. A peer Resolver service offers broadcast and one-to-one messages and the pipe service offers the possibility to transfer binary data, i.e. files between peers.

The peers P of the network provide Web Services W to remote peers P and client applications A. Web Services W need a container that hosts them and enables a peer to add and to deploy services during runtime.

The Tomcat server in conjunction with the Apache Axis package both from the Apache Project, provide a suitable choice as Web Service container WC. Axis hosts three different types of Web Services. The type JWS provides the possibility of automatic deployment and un-deployment.

The user-defined deployment for JAR packages and services not packaged can be achieved using the AdminClient object in Axis, which is a command line program that calls Axis via SOAP in order to deploy or un-deploy services. The shadow S of a peer P has to store Web Services W that were transferred from other peers P to save them inside of the network and to protect against loss. Due to the reason that there is no need for the shadow to run the services, it could be preferably implemented as a plain folder. The needed WSDL files of the services that are ordinarily created by Axis could be stored in the shadow S, too. This enables identifying even inactive services.

The Service Observer SO module handles requests of a client application A. It starts the request for specific services and stores the results in order to give a faster feedback to the client application on further requests for the same service. In case a peer and its services leave the network, the Service Observer SO could keep its internal list of services up to date to avoid that the SOAP call of the client application A fails. In case a service is not running in a WSRE but is still available in a shadow S, the observer SO triggers the activation of the service W by informing the responsible service keeper SK.

The Service LookUp SL module comprises the logic that controls the Web Service Container WC. It examines the Web Services W of the Web Service Container WC and answers service requests. Therefore it knows the WSDLs that are currently running and matches the requests from remote Service Observer SO modules. In case a request can be satisfied, the binding information for the SOAP call could be forwarded to the service observer SO that initiated the request.

In addition the Service LookUp module is responsible to propagate the web services that are running in the Web Service Container WC in case they are only available on the local peer P. Therefore it looks for a remote peer P that wants to receive the specified Web Service W, subsequently it uses the P2P Layer L to copy the files of this Web service. Therefore it decides which of the peers P that are ready to receive the service will finally get it.

Similar to the Service LookUp SL module, the Service Keeper SK module has the control of the shadows SC and the Web services W that are stored inside of it. It receives the requests of a remote Service LookUp SL module for a recipient of a service and decides if a service is copied into the local shadow. The Service Keeper SK could also be accountable for activating a service, e.g. if receiving a corresponding request of an Observer SO module. Then it copies the needed files to the Web Service Container WC and forces the WSRE to deploy the Web service W. After that the service is available for the LookUp SL module and therewith in the network again.

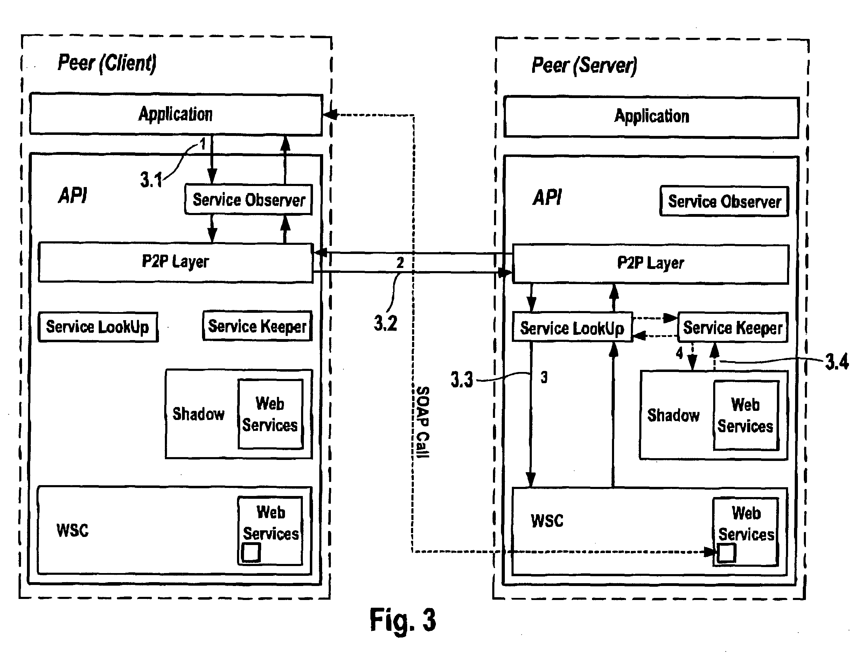

Fig. 3 shows a service request or invocation by client application triggering service relocation and finally service activation.

The service request process is started if a client application asks a peer to find a SOAP endpoint for a specific function. Therefore it specifies the name of the service and the operation and the type of the input and output parameters and passes them to the peer where they are forwarded to the Service Observer module, see 3.1. The Observer stores the information and starts to look for a matching service. Therefore it first checks if the binding information is already known from a former request for the same service or if the service is running on the local peer to avoid unnecessary network access and traffic. In case these checks fail, the P2P Layer is used to start a broadcast with the service request, see 3.2. Thus the query is submitted through the peer to peer network. The receiving peers' P2P Layer forwards the request to the Service LookUp module, which checks its local Web Service Container for the needed service, see 3.3. If the service is available it generates the binding point information and responds to the request. Otherwise the Service Keeper module is asked if the service is available in the shadow, see 3.4. In this case the answer contains a proposal to activate the service, otherwise the service request is discarded and the peer will not respond to the request. The Service Observer of the client peer that started the request meanwhile waits for the answers to his request. If this client gets the result that the service is running on a remote peer, the binding information will be stored and forwarded to the client application, which continues with the SOAP call. If there was no fitting response after a timeout interval the Observer first checks the local and then the remote shadows for the service. If the service is located in any shadow the procedure it will be activated, otherwise an Exception is raised which has to be handled by the client application.

If a peer gets suddenly lost the Web Services that he is hosting, he might disappear from to network. The Service LookUp modules are responsible to prevent this undesirable effect. Therefore it performs periodically a procedure to relocate its services in case that they are only available to the local peer. The involved peers can be described with the role of the donator who gives the service and the acceptor who receives the service.

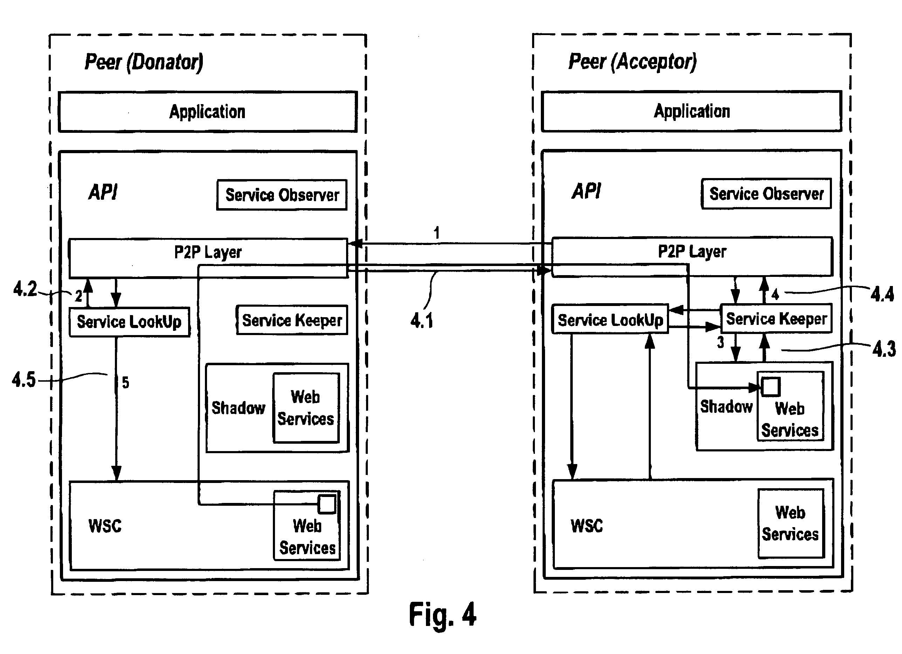

The procedure, shown in Fig. 4, starts with a broadcast 4.1 initiated by the donators DO LookUp module via the P2P Layer where the information about the services that are currently running on the local peer are submitted. The remote peers respond in case they have a service either running or in their shadow. The Service LookUp module exploits the answers and reviews after a specific time slice if there are services that are only running on the local peer. If there are any, a peer is discovered that wants to copy the service into its shadow, see 4.2. The acceptor AC peers' Service Keeper receives the query and the availability, i.e. if the service is either running in his WSC or stored in his shadow, see 4.3. If the service is not available on the acceptor AC the Service Keeper judges whether to store this service in his Shadow, see 4.4. In case the Keeper decides to copy the service he forces the P2P Layer to open file input pipes for the services files and then responds to the query which is in turn received by the LookUp module of the donator DO. The donator then determines who of the peers that responded to his query will finally get the service. Subsequently he transfers the files from the WSC, see 4.5 via the P2P Layer to the Shadow of the acceptor AC.

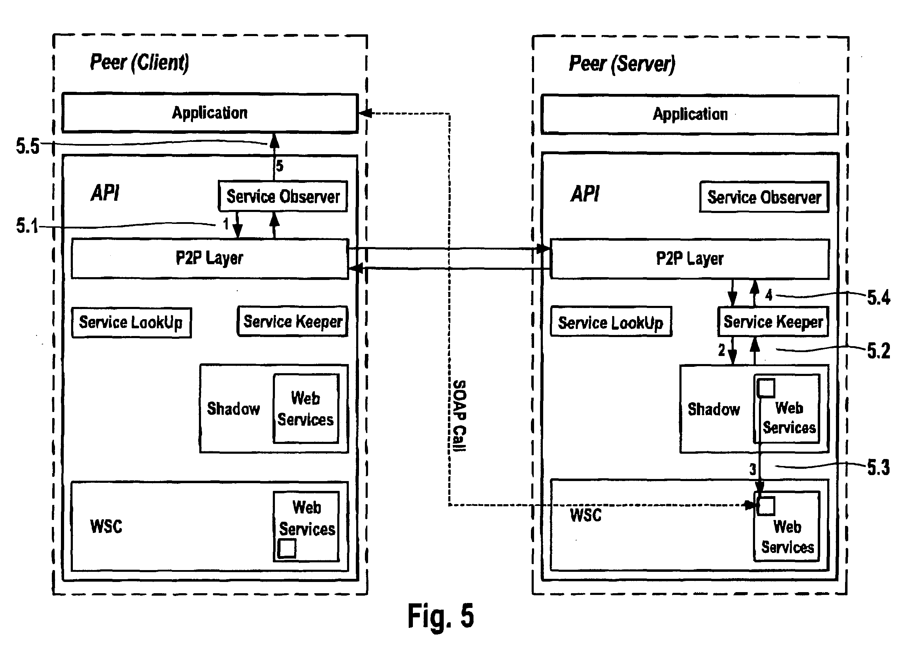

If a peer disappears from the network its services will disappear, too. Therefore these services should preferably be transferred to the shadows of remote peers. If a client application now invokes this service again, the service has to be activated. This procedure is shown in Fig 5.

In case the Service Observer receives no reply on a service invocation, the observer checks 5.4 his and the remote shadows for the service. If the service is located in a remote Shadow the P2P Layer is used to send an activation request via a one-to-one connection to the server peer, see 5.1. This request received by the Service Keeper triggers the activation of the service, see 5.2. At first the service is copied into the Web Service Container, then it is deployed. From now on the service is available in the network again. The Service Keeper then responds 5.4 to the request and includes the binding information for the SOAP call in the reply. The Service Observer of the client peer updates the list of available services and passes 5.5 the binding information on to the client application, which now is capable to perform the SOAP call.

When setting up an environment preferably each peer comprises a running Tomcat server with Axis installed, because these programs serve as the container for the Web Services.

The exemplary version of the software consists of four packages. A first package 'de.alcatel.zfza.wsp2pn' contains only a class WSP2PNetwork. This class is the entry point for client applications. By instantiating this class, the program starts the whole peer. This class also contains the main function that starts a peer that acts as a standalone server. The second package 'de.alcatel.zfza.wsp2pn.modules' contains the modules concerning the peer architecture and the peer-to-peer layer. Each module is able to access the peer-to-peer layer to send messages to remote peers. Furthermore the modules may exchange data with themselves via the aggregation over the WSP2PNetwork object. The package 'de.alcatel.zfza.wsp2pn.p2player' contains several classes that are used by the p2p layer. They describe the format of the messages, the message handlers that receive and handle the data and the pipes that are used to transfer files over the network. The last package 'de.alcatel.zfza.wsp2pn.util' contains tools classes.

A class WSP2PNetwork might be an entry point for client applications. Additionally it contains the main function that allows starting a standalone peer without client application. The main function instantiates an instance of the class WSP2Pnetwork for starting a peer and its services.

A method findEndpoint() might search for the specified service. A client application uses this function to start a lookup for the SOAP endpoint, which is the return value of the function. If the lookup was not successful, an Exception is raised by the method, which can be handled by the client application. Since there is no UDDI that a developer can consult in order to find services that he may use, there has to be a possibility to determine which services are provided by the network. A method listAvailableServices() is intended to act as an interface for developers. A class P2PLayer is the heart of the peer-to-peer network. It is responsible for the initialization of the JXTA^{™} platform and it is the interface for sending messages for the modules that contain the logic of a peer. A PeerGroup object is the connection to the JXTAT^{™} network. An activeGroup is either the netPeerGroup that all peers are member of or the wsp2pGroup that is initialized for members of the WSP2P Network. A resolver service object might be an implementation of the resolver protocol. It is used to send messages via the network. The pipe service is the implementation of the pipe protocol. It is used to transfer files via the network. A method startJxta() initializes the JXTA^{™} network. By creating an instance of the netPeerGroup the start-up of the peer is performed. Preferably on the first start-up this initializes a dialog where the user has to configure the peer. A method initializePeerGroup() is responsible for creating a JXTA^{™} peer group for members of the WSP2P network. Therefore the method searches via the discovery service for a group advertisement of the WSP2P network. If nothing is found, it creates a new one with the default values for the network setup.

After that it uses the advertisement to join the group. Remaining methods of this class might have two different tasks. Either they provide an interface for creating messages to the modules of the system, or they provide an interface for creating pipes for file transfers. The messages and the pipes are created by the use of classes of the package de.alcatel.zfza.p2player.

The class ServiceObserver is the implementation of the Service Observer module. The class is responsible for the demands of the client application. It controls the lookup of a SOAP endpoint and it ensures that the binding information is up to date. Therefore it owns a timer task that is executed periodically. A method serviceRequest() might be called if a client application wants to find an endpoint for a specific service. This method is responsible for the lookup or, if the service is only in a shadow available, for the activation of the service. Therefore it first starts a request by sending a broadcast message over the network where the service is specified. After that it waits for answers of remote peers, either for answers that contain the binding information for the SOAP call or for answers that state that this service can be found in a shadow of a specific peer. Depending on the answers the method either returns the binding information or triggers the activation of the service on the remote peer. If no answer was received the method throws a ServiceNotFoundException. A method checkLocalServices() loads all available services of the local peer into an available-Services list. The method is called on the start-up of every peer. Therefore unnecessary SOAP calls to remote peers can be avoided. The ServiceLookUp class controls the services that are running in the WSC. It receives the service requests from the ServiceObserver class and handles them. In addition it is responsible to relocate the services that are only available on its WSC. Therefore it has a timer task that is executed periodically. The class ServiceKeeper controls the shadow where the relocated services are stored. On the first startup the shadow is created in the constructor of the class. The service keeper also decides whether he offers a Service Look Up module to copy a service or not. In addition it is responsible for activating services from the shadow. If a Service LookUp module determines that it has to relocate a service it starts a broadcast query to find a Service Keeper that is all set to receive the service. A method seekKeeper() receives these queries. It checks if the service is already stored in the shadow or running in the WSC. If not, the method copyServiceDecision() decides if the peer accepts the service. If this method returns true, input file pipes of the P2P Layer are opened and an answer message is sent to the peer that wants to relocate the service. A method copyServiceDecision() copies a service decision that may depend on various facts. E.g. a random value decides whether the Keeper accepts the service or not. The more services the shadow already owns, the less is the probability that it will accept a new one. If the shadows capacity is depleted, the oldest service might be disposed. This strategy raises different problems. Services may disappear from the network, because there is no guaranty that a service that is deleted by the Service Keeper is still available to other peers. On the other side services have to be deleted for the reason that otherwise the capacity of all shadows might deplete and therefore no service might be relocated any more. A possible way to solve this problem would be a cost-function for the Keeper and the LookUp module. The Keeper could send a value that would indicate what he would have to invest if he took the service. This value could be calculated by using the age of the service, the amount of the service in the network or the type of the service. The LookUp module then could decide which peer would have to invest the least and relocate the service to that peer.

A Resolver service is used to send messages over the network, while the pipe service is used to transfer files. Therefore several classes that ease the use of the services are implemented. They are all located in the package de.alcatel.zfzs.wsp2pn.p2player. The Resolver service allows peers or client programs of peers to communicate with each other. The messages are sent in an XML format. Classes SeekProviderHandler, SeekProviderQueryMsg and SeekProviderResponseMsg are examples for resolver service message implementations.

Within the network this kind of message is used to transfer the service information for a service request via the network. The response message indicates that the service is running on the peer that sent the answer.

The interface net.jxta.resolver.QueryHandler forces the developer to implement the two functions processQuery() and processResponse() that receive the query and the response messages. By implementing these methods, the developer can control the handling of the received messages. The handler has to be registered in the resolver service of the peer group, for the reason that the messages are directed to the correct handler. On registering the handler the developer also has to specify a name for it. These steps are implemented in the constructor of the class P2PLayer. An example for creating a whole message can be seen in the method serviceRequest() of the same class. The name of the handler is specified for the reason that the resolver service can assign the message to the suitable handler. The hop count allows the developer to specify a maximum number of peers that forward the message.

The classes SeekProviderQueryMsg and SeekProviderResponseMsg might have the use to ease the creation of a message. The main task of these classes is to turn the values that shall be sent into an XML format and backwards. This is either done by the toString() method or by the second constructor.

The pipe service of JXTA^{™} allows the developer to create a unidirectional connection between two peers. The developer is free to send data either in binary or in a structured format through the pipes. Therefore the pipe service is dedicated for file transfers from one peer to another. If two peers use the same pipe a connection between two pipes is created. If more than one peer uses the same ID for an output pipe, it is possible to use the pipe service for multicast purpose.

The developer has to write two listeners if he wants to use the pipe service. One listener has to implement the net.jxta.pipe.InputPipeListener interface and the other has to implement the net.jxta.pipe.OutpuPipeListener interface. These classes implement one method respectively, which are called if two pipes with the same ID are registered in the same pipe service at the same time.

WSDL files are used to give the developer the possibility to look for specific services that he wants to access with his application. A class WsdlExaminer is a helper class with the task to analyze a WSDL file, in order to compare it to service requests. It loads the WSDL that is specified during the instantiation and provides several methods for the needed examination to identify operations or the whole service.

The project JWSDL focuses on providing an API for the handling of WSDL files. Unfortunately there is no release of the API available yet.
Considering the objectives of this project, a WsdlExaminer supports only native types as parameters. Because the WSDL file is created by Apache Axis, it contains peer specific information as the http port or a timestamp of the time when it was created. Therefore it is not possible to compare whole WSDL files. A method getHashValue() calculates a hash value over the name of the service and its operations and the type of the input and output parameters. The method returns this value as a String, which can easily be compared and sent to remote peers. The most important procedure the method lookUpOperation() performs during the lookup of an operation is a comparison of operations which are specified in WSDL, that are either located in the WSC or in the shadow. The method might return true if the operation name and the input and output types can be found in the WSDL. A service type describes the form in which they are existent. A class WsdIExaminer preferably four different types of services: TYPE UNKNOWN for "The method was not able to determine the type of the service"; JWS SERVICE

For "The service is a .jws file for automatic deployment in Axis"; JAR SERVICE for "The service is .jar package. "; CLASS SERVICE for "The remaining services are not packaged and consist of various class files".

Preferably a class ServiceInformation provides a container for the information about a service and the operation that a client application wants to call. A client instantiates an object of this class and passes it to the network if he wants to get the SOAP endpoint for the specified operation. A method equal to this class is used to compare objects with each other.

Due to the reason that it does not matter where the service is located, this method compares only the service and the operation name and the types of the input and output parameters. An endpoint and a peerID could be ignored.

To provide the possibility to catch all exceptions that are raised by the network at once, the class WSP2PNException inherits from the class Exception that is provided by the Java framework. Every further exception of the network in turn inherits from the WSP2PNException class. Therefore a client application might catch a particular exception of the network or alternatively all at once.

## Claims

1. A method of self-organizing distributing services of a telecommunication network, comprising the steps of invoking a service from a client through the telecommunication network by discovering a server providing the service and serving received requests by the server, **characterized by** comprising the further steps of deploying the server inside one or more peers of a distributed peer to peer platform, and discovering and performing a service invocation by means of the peer-to-peer platform.

2. The method according to claim 1, **characterized in that** a peer caches a server for improving performance.

3. The method according to claim 1, **characterized in that** a peer stores and maintains a server for improving robustness and guaranteeing service availability.

4. The method according to claim 1, **characterized in that** the service is a web service and the discovery comprises a look up in a directory formulated in web service description language and the service invocation comprises the exchange of simple object access protocol messages.

5. A service-system of self-organized distributing services in a telecommunication network, for invoking a service from a client through the telecommunication network by discovering a server providing the service and serving received requests by the server, **characterized in that** the service system comprises one or more peers of a distributed peer-to-peer platform, the peers being adapted to deploy a server for the service and the peer being a adapted to discover and perform a service invocation.

6. The service-system according to claim 5, **characterized in that** a peer comprises memory for caching a server for improving performance.

7. The service-system according to claim 5, **characterized in that** a peer comprises run-time environment for storing and maintaining a server for improving robustness and guaranteeing service availability.

8. The service-system according to claim 5, **characterized in that** the service is a web service and the system comprises a distributed directory for discovering, i.e. for looking up a server corresponding to a web service description and the peers comprising communication means for exchanging simple object access protocol messages.

9. A computer program product for self-organized distributing services in a telecommunication network comprising programming means adapted to perform the method according to claim 1.

## Amended claims

### Amended claims in accordance with Rule 86(2) EPC.

**1.** A method of distributing services on a peer to peer platform for a telecommunication network, the method comprising the steps of deploying a service inside one or more peers of the peer-to-peer platform, such that for invoking the service, a peer providing the service is discovered by looking up a peer of the one or more peers providing the service as a server serving received requests, **characterized in that** at least one peer of one or more peers announces the availability of inside services to its neighbourhood peers, **in that** at least one peer of the peer-to-peer platform keeps a directory of available services, and **in that** at least one peer of the peer-to-peer platform stores a shadow server, where the shadow server is received from at least one peer of the one or more peers, such that in case of a disappearing of a dedicated service, activating the service provided by the shadow server.

**2.** The method according to claim 1, **characterized in that** a peer caches a server for improving performance.

**3.** The method according to claim 1, **characterized in that** the service is a web service and the discovery comprises a look up in a directory formulated in web service description language and the service invocation comprises the exchange of simple object access protocol messages.

**4.** A service-system of distributing services on a peer to peer platform for a telecommunication network, the service-system comprising distribution means deploying a service inside one or more peers of the peer-to-peer platform, the service-system comprising invocation means for invoking the service, such that a peer providing the service is discovered by looking up a peer of the one or more peers providing the service as a server serving received requests, **characterized in that** at least one peer of one or more peers is adapted to announce the availability of inside services to its neighbourhood peers, **in that** at least one peer of the peer-to-peer platform is adapted to keep a directory of available services, and **in that** at least one peer of the peer-to-peer platform is adapted to store a shadow server, where the shadow server is received from at least one peer of the one or more peers, such that in case of a disappearing of a dedicated service, activating the service provided by the shadow server.

**5.** The service-system according to claim 4, **characterized in that** a peer comprises memory for caching a server for improving performance.

**6.** The service-system according to claim 5, **characterized in that** the service is a web service and the system comprises a distributed directory for discovering, i.e. for looking up a server corresponding to a web service description and the peers comprising communication means for exchanging simple object access protocol messages.

**7.** A computer program product for distributing services on a peer to peer platform for a telecommunication network comprising programming means adapted to perform the method according to claim 1.
